# EUROPEAN PATENT APPLICATION

(11) **EP 0 642 006 A1**
(43) Date of publication of application: **08.03.1995**
(21) Application number: 94202327.6
(22) Date of filing: 16.08.1994
(51) Int. Cl.: G01K 5/70, G12B 1/02

(54) **Bi-metal gauge**

(30) Priority: 01.09.1993 GB 9318161
(71) Applicant: DELCO ELECTRONICS OVERSEAS CORPORATION, Detroit, Michigan 48202 (US)
(72) Inventor: Knight, Brian Anthony, Ainsdale, Southport PR8 2SY (GB); Brown, Philip Charles, Aintree, Liverpool L10 8JZ (GB); Cowperthwaite, David William, Southport PR9 9YB (GB)
(74) Representative: Denton, Michael John

(57) **Abstract**

A bi-metal gauge includes a bi-metal element (112) deflectable on application of heat thereto, a base plate (116) supporting the bi-metal element (112), a pointer carrier (150) rotatable on deflection of the bi-metal element (112), a pointer (160) connected to and rotatable with the pointer carrier (150), and a gauge case including guide means (118,120;126,127) for guiding the base plate (116) substantially in a single direction relative to the pointer carrier (150). The pointer (160) includes a shaft (156) having a bore therein of substantially circular axial cross-section and the pointer carrier comprises a link pin of substantially circular axial cross-section receivable in the bore of the pointer shaft (156) such that the pointer (160) can be fitted to the pointer carrier (150) in any orientation. Calibration includes a first step in which the support member is moved until a link pin (154) of the bi-metal element (112) is a predetermined distance of the axis of rotation of the pointer (160) and a second step in which the pointer (160) is placed in the correct orientation on the pointer carrier (150).

## Description

The present invention relates to a bi-metal gauge and to a method of calibrating a bi-metal gauge.

A known bi-metal gauge includes a bi-metal element fixed to a support member and having a cantilevered portion over which an electrical coil is wound. When current is passed through the coil, the cantilevered portion is heated and deflects from its rest position due to the imbalance in the composition thereof. The free end of the cantilevered portion cooperates with a pointer carrier such that deflection of the cantilevered portion causes rotation of a pointer carried by the pointer carrier.

On assembly of the gauge, the position of the bi-metal element must be adjusted relative to the pointer carrier to ensure (a) that deflection of the bi-metal element will cause rotation of the pointer through the whole of its intended range and (b) that deflection of the bi-metal element causes the correct amount of rotation of the pointer.

In a known bi-metal gauge, this calibration is carried out in two steps, the first of which involves rotating the bi-metal element relative to the pointer carrier so as to adjust rest position of the pointer and thereby the amount of rotation of the pointer for any predetermined gauge reading. The second stage involves moving the support member in a direction towards or away from the pointer carrier so as to adjust the range of rotation of the pointer.

The first stage of this calibration is achieved by mounting the pointer carrier and an end of the support member adjacent the pointer carrier to a cam in such a manner that rotation of the cam rotates the bi-metal element relative to the pointer carrier. The pointer carrier is provided with a pointer pin which is D-shaped in axial cross-section and fits into a bore of the pointer shaft, which is also D-shaped in axial cross-section, such that rotation of the pointer carrier results in adjustment of the rest position of the pointer.

A problem with this type of gauge is that the calibration stage is time consuming and expensive.

The present invention seeks to provide an improved bi-metal gauge and method of calibrating a bi-metal gauge.

According to an aspect of the present invention, there is provided a bi-metal gauge as specified in claim 1.

Giving a support member of the gauge a single direction of movement means that only one calibration step must be carried out on the support member, namely the step of adjusting the range of movement of the gauge pointer caused by deflection of the bi-metal element. It has been found that this feature can result in substantial savings in terms of calibration steps and time required, which in some embodiments can result in savings of the order of fifty percent of the cost of a gauge. The orientation of the pointer can be readily set by driving the gauge to a predetermined state and then setting the pointer on a pointer carrier of the gauge at the correct gauge reading.

The connecting means of the pointer may include a shaft comprising a bore therein of substantially circular axial cross-section and the pointer carrier may comprise a pointer pin of substantially circular axial cross-section receivable in the bore of the pointer shaft. This arrangement allows the pointer to be connected to the pointer carrier in any orientation.

In an embodiment, there is provided fixing means for fixing the support member relative to a case of the gauge. The fixing means ensures that once the support member has been set in the correct position, it cannot drift therefrom.

The fixing means may include a serrated portion on the support member and a fixing member on the gauge case. The support member may be fixable relative to the gauge case by fixing material located between the fixing member and the serrated portion.

Alternatively, the fixing member may be made of thermoplastic material meltable to flow over the serrated portion, thereby to fix the support member relative to the gauge case.

Advantageously, the support member may comprise first and second elongate slots having their axes disposed substantially along the direction of movement of the support member in the gauge case, the gauge case including first and second guide posts co-operable with the first and second elongate slots.

Additionally or alternatively, the support member may comprise first and second substantially straight edges extending substantially along the direction of movement of the support member in the gauge case, the gauge case comprising first and second guide walls co-operable with the first and second edges.

Preferably, the first and second guide walls include flanges extending over the first and second edges of the support member.

According to another aspect of the present invention, there is provided a method of calibrating a bi-metal gauge as specified in claim 10.

The method can ensure that the gauge is substantially always correctly calibrated on the first attempt, thereby being able to provide significant manufacturing savings.

In a preferred embodiment, the position of the bi-metal element of a gauge is measured relative to the position of a support for the pointer carrier of a gauge. In practice, the pointer carrier is preferably not fitted until after calibration of the support member.

The position of the bi-metal gauge may be measured on the basis of a link pin coupling the bi-metal element to the pointer carrier. The link pin can readily be detected by an electronic vision system, thereby enabling the support member to be calibrated automatically. Details of such automatic calibration are given in our co-pending European patent application no (RJ/559) filed the same day as this application.

Advantageously, the method includes step of deflecting the bi-metal element by a second predetermined amount and connecting the pointer to the pointer carrier in an orientation representative of the gauge reading related to the deflection of the bi-metal element. The gauge is preferably driven at a critical state, for example representative of low fuel level or high coolant temperature, and the pointer then set in a position on a gauge scale which indicates this condition. In this manner, it can be ensured that the position of the pointer is accurate on the when a critical state is detected.

The term bi-metal used herein is intended to denote any type of element which deflects on application of heat thereto, in similar manner to a conventional bi-metal element, and is intended also to include elements which have a chemical composition causing them to behave in the manner of a conventional bi-metal element.

An embodiment of the present invention is described below, by way of illustration only, with reference to the accompanying drawings, in which:
Figure 1 is a plan view of the inside of a known bi-metal gauge;
Figure 2 is a plan view of an embodiment of bi-metal gauge with a front wall of the gauge and a gauge dial omitted; and
Figure 3 shows a side elevational view of a bi-metal element of the gauge of Figure 2.

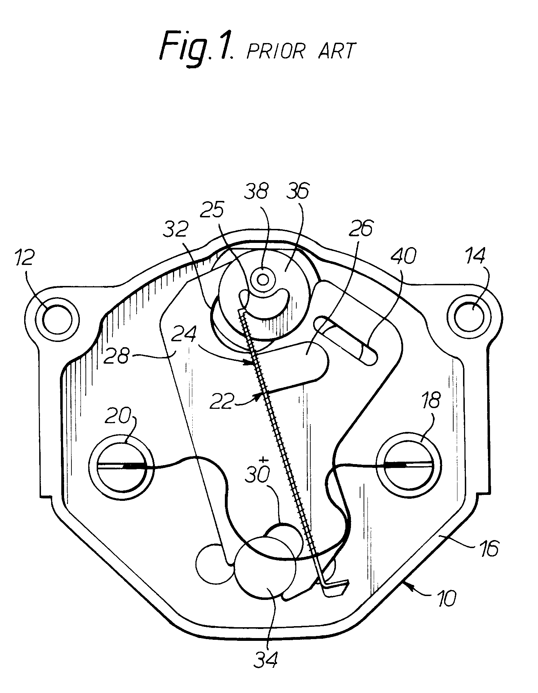

Referring to Figure 1, the prior art bi-metal gauge shown includes a gauge case 10 open at a front end thereof. A pair of spaced holes 12,14 in flanges extending from a peripheral wall 16 of the case 10 are provided to fix the gauge case to a coverplate (not shown).

Two apertures in the base wall of the case 10 support respective studs 18,20 which act both to fix the gauge in an instrument, for example an instrument cluster of a vehicle, and as electrical terminals for the supply of current to coil 22. The coil 22 is wound around a cantilevered portion 24 of a bi-metal element. Attached at the free end of the cantilevered portion 24 and extending substantially perpendicularly thereto is a link pin 25.

A tab 26 secures the bi-metal element to a base plate 28. The base plate 28 is provided at opposite ends thereof with two U-shaped recesses 30,32 which have substantially parallel axes. The first U-shaped recess 30 receives a first guide post 34 which is fixed to the base wall of the case 10. The second recess 32 receives a second guide post 36 which includes an upper guide pin 38 offset from the centre point of the guide post 34 and having a bore therein for receiving a pin of a pointer carrier. A lower guide pin (not shown) is located substantially co-axially with the upper guide pin 38 and extends through an aperture in the base wall of the case 10.

An elongate slot 40 extends over an opening in the base wall of the case 10 in a direction substantially perpendicular to the axis of the two U-shaped recesses 30,32.

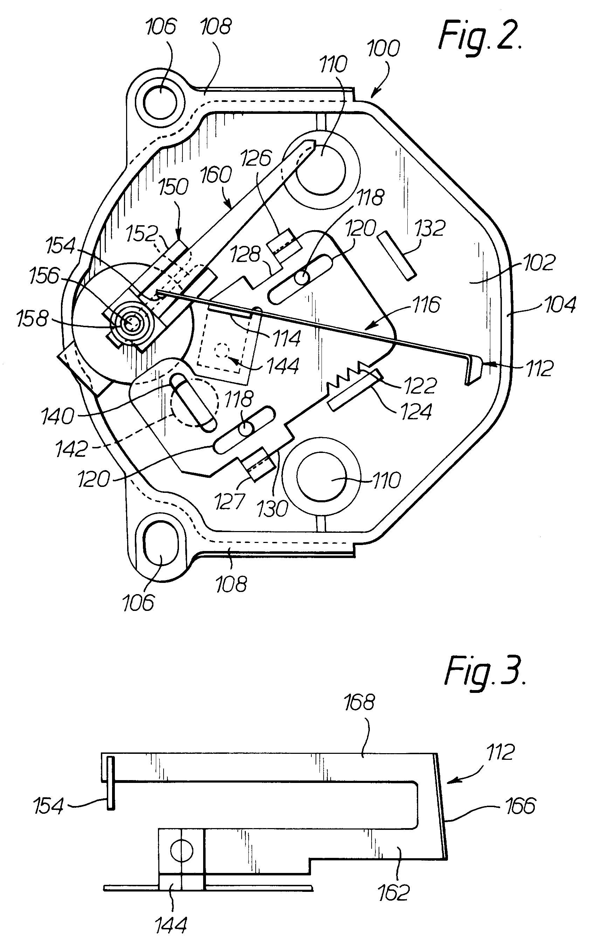

The pointer carrier used in this prior art gauge is similar to the pointer carrier shown in Figure 2 and includes two spaced arms, between which the link pin 25 slides, and a coupling shaft to which a pointer is secured. The coupling shaft and the pointer are designed such that the pointer can fit onto the coupling shaft in only one orientation.

Following assembly of the bi-metal gauge, the bi-metal element is set to a predetermined state and the second guide post 36 rotated to rotate the base plate 28 so as to move the link pin 25 relative to the upper guide pin 38, causing rotation of the pointer carrier and thus rotation of the pointer. When the pointer is at or proximate the correct reading for the state of the bi-metal element, adjustment is made for the range of pointer travel, namely by moving the base plate 28 along the guide posts 34,36, by use of a tool in co-operation with the elongate slot 40.

After the second step, the gauge is tested and if the pointer fails to give a sufficiently accurate reading, calibration is repeated.

An embodiment of gauge is shown in Figure 2, in which a front wall of the gauge and a gauge dial are not shown. In applications where the gauge is intended for automotive use, for example in a vehicle instrument cluster in which the graphic symbols of the gauge are designed to be illuminated from the rear of the dial, the front wall of the gauge is part of a light guide of transparent plastics material. The dial is the form of a generally opaque applique which includes translucent regions forming graphic symbols associated with the particular gauge.

Figure 2 shows a gauge pointer and pointer carrier in outline so as not to obscure from the view the other components of the gauge.

The case 100 includes a substantially flat base wall 102 and a peripheral wall 104 extending around the perimeter of the base wall 102. A pair of apertures 106 are provided in respective flanges 108 extending from the peripheral wall 104 for use in fixing the support member to its front wall and/or to an instrument case or other components. First and second apertures in the base wall 102 support first and second metal studs 110 for use in securing the gauge within an instrument or to other components and for use as electrical terminals for the coil (not shown) for bi-metal element 112.

Referring to Figure 3, which shows the bi-metal element 160 in better detail, it can be seen that the element 160 is substantially of U-shaped form. It includes a shorter arm 162 having a flange 164 at its free end for connection to the flange 144 of the base plate 116.

A portion of the shorter arm 162 has a greater axial cross-sectional width than the remainder of the arm and in use extends below the remainder of the arm 162. This ensures that the bi-metal element 160 is spaced in use from the base plate 116 so that its deflection is not impeded.

The connecting piece 166 connecting the shorter arm 162 to the free arm 168 is generally rectangular and is bent about a line at a slight angle to the normal of the two arms 162,168. The free arm 168 is substantially rectangular and has at attached at its free end a link pin 154, which extends in a direction substantially perpendicular to the free arm 168.

Bi-metal element 112 is fixed by a tab 114 to a generally rectangular support member or carrier plate 116. For the sake of convenience, the tab 114 is fixed to a flange 144 of the carrier plate which can be bent out of the plane of the carrier plate 116 towards the bi-metal element 112.

Referring again to Figure 2, a pair of guide posts 118 extend from the base wall 102 through respective elongate slots 120 in the carrier plate 116 for enabling movement of the carrier plate 116 solely in the axial direction thereof.

Guiding is also provided by means of hooked guide walls 126,127 extending from the base wall 102 proximate opposing corners of the carrier plate 116, each guide wall 126,127 including a flange located over the carrier plate 116 for preventing movement thereof off the base wall 102.

It is possible to omit either the guide posts 118 and slots 120 or the hooked guide walls 126,127.

At a location normally proximate one of the guide walls 126, the carrier plate 116 is provided with a recess 128 which can be aligned with that guide wall. At the other guide wall 127, the carrier plate 116 has a substantially rectangular flange 130 which is normally aligned with this guide wall 127. In order to fit the carrier plate to onto the base wall 102, the flange 130 is mis-aligned and the recess 128 is aligned with their respective guide walls 126,127. This enables the carrier plate 116 to pass the two guide walls 126,127 and then to be slid in the direction of pointer 160 so as to pass under the flanges of the guide walls 126,127 for retention thereby. A locating wall 132 is provided an end of the carrier plate 116 opposite the pointer side on the plate for assisting in locating the carrier plate 116 in the case 100.

A transverse elongate opening 140 is provided in the carrier plate 116 and is disposed over a substantially circular aperture 142 in the base wall 102. The carrier plate 116 can be moved by a tool (not shown) inserted into the elongate opening 140 through the circular aperture 142.

A part 122 of one of the elongate sides of the carrier plate 116 is serrated to act as a fixing point for fixing the carrier plate 116 to the base wall 102 after calibration of the gauge. For this purpose, there is provided adjacent the serrated part 122 a fixing wall 124 extending from the base wall 102. The fixing wall either support an amount of adhesive between the fixing wall and the serrated part 122 or be melted and hardened onto the serrated part 122.

Located in the base wall 102 at the opposite side of the carrier plate 116 from the guide wall 126 is a bore (not shown) for pivotably receiving a lower link pin of a pointer carrier 150. The pointer carrier 150 is of generally cylindrical form and includes a pair of spaced parallel arms 152 extending substantially perpendicularly from the body of the pointer carrier 150. The arms 152 receive slidably therebetween link pin 154 secured at the free end of the cantilevered portion of bi-metal gauge 112.

An upper pointer pin 156 extending substantially co-axially from the body of the pointer carrier 150 is received within a bore of pointer shaft 158 of pointer 160. The shapes of the upper link pin 156 and of the bore of pointer shaft 158 are such that the pointer 160 can be placed on the upper link pin 156 in any orientation.

Assembly and calibration of the gauge is carried out as follows. Once bi-metal element 112 is fixed to the carrier plate 116, the carrier plate is placed on the base wall 102 and slid along the base wall 102 to pass under the flanges of the guide walls 126,127, to the position shown in Figure 2. A predetermined current is then passed through the coil of the bi-metal element 112 to deflect the bi-metal element by a predetermined amount and the distance of the link pin 154 from the pointer carrier bore in the base wall 102 is then measured.

The carrier plate 116 is then moved, by the use of a tool inserted through the circular aperture 142 into the elongate opening 140, until the link pin 154 is within a predetermined distance of the pointer carrier bore.

When the link pin 154 is within the predetermined distance of the pointer carrier bore, the carrier plate 116 is fixed to the base wall 102, either by use of adhesive applied between the serrated part 122 and the fixing wall 124 or by melting the fixing wall 124 onto the serrated part 122 and then allowing it to cool so as to harden.

The pointer carrier 150 is then added by locating the lower link pin into the bore in the base wall 102 and the front cover then fitted onto the case. A bore in the front cover enables the upper link pin 156 to extend through the front cover. Where the instrument is intended for use with a display which is lit from the rear thereof, the front cover may be part of a light guide used in guiding light from one or more lamps to the display area, in known manner.

The display, typically in the form of an applique having graphic symbols thereon pertaining to the parameter measured by the gauge, is then fitted over the front cover. The upper pointer pin 156 extends through an aperture in the display.

At this stage, the gauge is driven to a state in which the pointer 160 would point to a critical position on the display (for example, to a low fuel level position or high coolant temperature position). The pointer 160 is then fitted onto the upper pointer pin 156 at this position, this being possible due to the shape of the upper pointer pin 156 and the bore of the pointer shaft 158.

The selection of the orientation of the pointer 160 relative to the pointer carrier 150 avoids the need of the cam of prior art gauges and the calibration step associated therewith.

The gauge case is preferably made of a substantially light transparent material and the carrier plate 116 of metal or an alloy.

Other aspects of this bi-metal gauge, in particular apparatus and a method of calibrating a bi-metal gauge of the type described herein, are covered in our co-pending European patent application no (RJ/559), filed the same day as this application.

The disclosures in British patent application no. 9318161.8, from which this application claims priority, and in the abstract accompanying this application are incorporated herein by reference.

## Claims

1. A bi-metal gauge comprising a bi-metal element (112) deflectable on application of heat thereto, a support member (116) supporting the bi-metal element, a pointer carrier (150) rotatable on deflection of the bi-metal element, a pointer (160) including connecting means (158) co-operable with the pointer carrier for connecting the pointer in substantially any orientation relative to the pointer carrier over a range of possible pointer orientations and so as to rotate with the pointer carrier and a gauge case (100) including guide means for guiding the support member substantially in a single direction relative to the pointer carrier.

2. A bi-metal gauge according to claim 1, wherein the connecting means of the pointer includes a shaft (158) comprising a bore therein of substantially circular axial cross-section and the pointer carrier comprises a pointer pin (156) of substantially circular axial cross-section receivable in the bore of the pointer shaft.

3. A bi-metal gauge according to claim 1 or 2, comprising fixing means (122,124) for fixing the support member relative to the gauge case.

4. A bi-metal gauge according to claim 3, wherein the fixing means includes a serrated portion (122) on the support member and a fixing member (124) on the gauge case.

5. A bi-metal gauge according to claim 4, wherein the support member is fixable relative to the gauge case by fixing material located between the fixing member (124) and the serrated portion (122).

6. A bi-metal gauge according to claim 4, wherein the fixing member (124) is made of thermoplastic material meltable to flow over the serrated portion (122), thereby to fix the support member relative to the gauge case.

7. A bi-metal gauge according to any preceding claim, wherein the support member (116) comprises first and second elongate slots (120), the axes of which being disposed substantially along the direction of movement of the support member in the gauge case, the gauge case including first and second guide posts (118) slidable within the first and second elongate slots.

8. A bi-metal gauge according to any preceding claim, wherein the support member (116) comprises first and second substantially straight edges extending substantially along the direction of movement of the support member in the gauge case, the gauge case comprising first and second guide walls (126,127) co-operable with the first and second edges.

9. A bi-metal gauge according to claim 8, wherein the first and second guide walls (126,127) include flanges extending over the first and second edges of the support member.

10. A method of calibrating a bi-metal gauge including a bi-metal element (112) deflectable on application of heat thereto, a support member (116) supporting the bi-metal element, a pointer carrier (150) rotatable on deflection of the bi-metal element, a pointer (160) mountable on the pointer carrier substantially in any orientation relative to the pointer carrier over a range of possible pointer orientations and rotatable with the pointer carrier, and a gauge case (100) including guide means for guiding the support member in a predetermined direction relative to the pointer carrier; the method comprising the steps of deflecting the bi-metal element (112) by a predetermined amount, measuring the position of the bi-metal element relative to the pointer carrier, moving the support member in the predetermined direction until the bi-metal element is within a predetermined distance of the pointer carrier, and connecting the pointer to the pointer carrier.

11. A method according to claim 10, wherein the position of the bi-metal element is measured relative to the position of a support for the pointer carrier.

12. A method according to claim 10 or 11, wherein the position of the bi-metal gauge is measured on the basis of a link pin (154) coupling the bi-metal element to the pointer carrier.

13. A method according to claim 10, 11 or 12, comprising the step of deflecting the bi-metal element by a second predetermined amount and connecting the pointer to the pointer carrier in an orientation representative of the gauge reading related to the deflection of the bi-metal element.
